Europäisches Patentamt

European Patent Office

Office européen des brevets

(11) Veröffentlichungsnummer: **0 544 094 A1**

## EUROPÄISCHE PATENTANMELDUNG

(21) Anmeldenummer: **92117813.3**

(22) Anmeldetag: **19.10.92**

(51) Int. Cl.5: **A22C 17/00**

(30) Priorität: **27.11.91 DE 4138964**

(43) Veröffentlichungstag der Anmeldung:
**02.06.93 Patentblatt 93/22**

(84) Benannte Vertragsstaaten:
**BE DE DK ES FR GB IT NL**

(71) Anmelder: **NORDISCHER MASCHINENBAU
RUD. BAADER GMBH + CO KG
Geniner Strasse 249
W-2400 Lübeck(DE)**

(72) Erfinder: **Hegelmann, Heinz-Dieter
Hellkamp 10
W-2400 Lübeck(DE)**
Erfinder: **Schulte, Josef
Friedrichstrasse 15
W-3410 Northeim(DE)**

(54) **Einrichtung zum Bearbeiten von Geflügelschenkeln.**

(57) Es ist eine Stanzvorrichtung (1) zum Ausstanzen des Mittelgelenkes (12) von aus unteren und oberen Beingliedern bestehenden Geflügelschenkeln (11) beschrieben. Durch Entfernen des Mittelgelenkes lassen sich derartige Geflügelschenkel sehr einfach entbeinen, indem die verbliebenen Knochenstümpfe von Ober- und Unterschenkel unter Rückhalten des Fleisches gezogen werden. Um mit niedrigem, die Standzeit der Stirnschneide (5) des als Hohlstempel (4) ausgebildeten Stanzwerkzeuges verlängerndem Stanzdruck arbeiten zu können und gleichzeitig eine sichere Trennung des ausgestanzten Teils zu erreichen, ist der Hohlstempel mit einem Anschlußstutzen (7) versehen, über den der Innenraum (8) des Hohlstempels mit einer Vakuumquelle verbindbar ist.

Fig. 1

EP 0 544 094 A1

Die Erfindung betrifft eine Einrichtung zum Bearbeiten von Geflügelschenkeln , welche aus unteren und oberen Beingliedern bestehen, die durch ein Mittelgelenk miteinander verbunden sind, und bei welcher eine Stanzvorrichtung mit einem ringförmigen Hohlstempel zum Ausstanzen des Mittelgelenks vorgesehen ist.

Die durch die vorliegende Erfindung verbesserte Stanzvorrichtung ist aus der EP-A1 0402 647 zu entnehmen, die eine Einrichtung zum Entbeinen von aus Unter- und Oberschenkel bestehenden Geflügelschenkeln mit den Merkmalen des Oberbegriffs aufweist. Der Hohlstempel wird dabei gegen eine plane Gegenlage geführt, durch welche Bewegung das Mittelgelenk ausgestanzt wird, so daß die Knochen aus den unteren und oberen Beingliedern herausgezogen werden können.

Bei dieser Einrichtung zeigen sich im praktischen Einsatz einige Nachteile. So erweist sich die Schneide des Hohlstempels selbst bei optimaler Materialauswahl für Hohlstempel und Gegenlage als unakzeptabel kurzlebig , was jeweils sehr bald dazu führt, daß das freizustanzende Mittelgelenk durch ungetrennte Fasern mit dem übrigen Bearbeitungsgut verbunden bleibt und am Ende des Entbeinungsprozesses manuell, d. h. lohnintensiv entfernt werden muß. Desweiteren sind am Endprodukt vereinzelt feine Knochensplitter, Blut- und Markreste vorzufinden, die aus dem Stanzvorgang stammen und den Stanzflächen anhaften.

Es ist die Aufgabe der Erfindung, die Standzeit der Schneide des Hohlstempels zu verlängern und zu verhindern, daß dem Endprodukt "Verunreinigungen" der genannten Art anhaften.

Diese Aufgabe wird erfindungsgemäß dadurch gelöst, daß der Hohlstempel einen Anschlußstutzen aufweist, welcher mit dem Innenraum des Hohlstempels in Verbindung steht und mit einer Vakuumquelle verbindbar ist.

Eine derartige Austattung bewirkt, daß die auf den Hohlstempel ausgeübte Stanzkraft reduziert werden kann, da der Unterdruck in dem Innenraum des Hohlstempels den ausgestanzten Teil in den Innenraum hineinzieht und dabei nicht getrennte Fasern durch Ziehen über die Stirnschneide des Hohlstempels zum Abreißen bringt. Darüber hinaus werden durch den Stanzvorgang erzeugte Kleinpartikel durch den Spalt zwischen der Innenwandung des Hohlstempels und dem ausgestanzten Teil hindurch abgesaugt und damit eventuelle Verunreinigungen beseitigt. Dieser letzterwähnte Effekt kann noch dadurch verbessert werden, daß der Hohlstempel in dem in das Stanzgut eindringenden Endbereich mit seitlichen Durchbrüchen versehen ist.

Das Auswerfen des ausgestanzten Teils aus dem Innenraum des Hohlstempels kann durch einen mechanischen Auswerfer erfolgen, möglich ist aber auch, das ausgestanzte Teil mit Hilfe der Vakuumquelle abzusaugen, zu welchem Zweck der Anschlußstutzen am freien Ende des Hohlstempels vorgesehen ist und der Anschluß der Vakuumquelle über ein Puffergefäß erfolgt.

Die Erfindung wird nachstehend anhand eines in der Zeichnung dargestellten Ausführungsbeispieles näher erläutert. Es zeigt

Fig. 1    eine ausschnittweise Ansicht der Stanzstation einer Vorrichtung zum Ausstanzen des Mittelgelenkes eines aus unterem und oberem Beinglied bestehenden Geflügelschenkels axonometrisch dargestellt;

Fig. 2    eine Stirnansicht des Hohlstempels mit Blick auf die Schneide desselben;

Fig. 3    eine Schnittdarstellung des Hohlstempels, geschnitten längs Schnittlinie III - III nach Fig. 2 ;

Fig. 4    eine Darstellung entsprechend Fig. 3 unmittelbar nach Beendigung des Stanzvorganges;

Fig. 5    eine Darstellung entsprechend Fig. 4 während des Ausstoßes des ausgestanzten Teils.

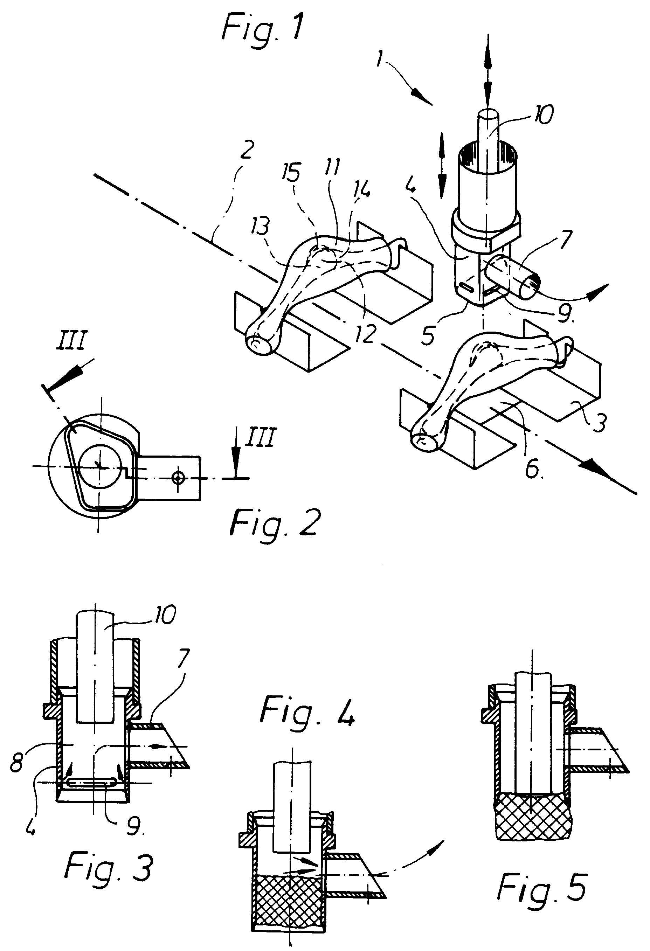

Die erfindungsgemäße Stanzvorrichtung 1 ist in einem nicht gezeigten Maschinengestell einer Bearbeitungs-Maschine untergebracht, die beispielsweise Gegenstand der EP 0402 647 ist. Diese Maschine weist gemäß Fig. 1 der vorliegenden Unterlagen einen Förderer 2 mit Haltevorrichtungen 3 zur Aufnahme der zu bearbeitenden Geflügelschenkel 11 auf, die dabei so ausgerichtet werden, daß das Mittelgelenk 12 in den Arbeitsbereich der Stanzvorrichtung 1 gelangt. Diese umfaßt einen durch geeignete, nicht gezeigte Mittel taktweise in die Bahn der Haltevorrichtungen 3 absenkbaren und aus dieser wieder aussteuerbaren Hohlstempel 4 mit einer Stirnschneide 5 , die in der Absenkstellung mit einer Gegenlage 6 in Wechselwirkung tritt. Der Querschnitt des wirksamen Teils des Hohlstempels 4 beschreibt ein unregelmäßiges Viereck mit abgerundeten Ecken und schließt damit eine Fläche ein, die in entsprechender Ausrichtung die beiden das Mittelgelenk 12 bildenden Gelenkköpfe 13 und 14 und die Kniescheibe 15 umfaßt.

Der Hohlstempel 4 ist mit einem seitlichen Anschlußstutzen 7 versehen, über den der Innenraum 8 des Hohlstempels 4 mit einer nicht gezeigten Vakuumquelle verbindbar ist. In dem in das Stanzgut eindringenden Endbereich sind die Wandflächen des Hohlstempels 4 mit Durchbrüchen vorzugsweise in Form von schmalen Schlitzen 9 versehen. Schließlich befindet sich im Inneren des Hohlstempels 4 ein in der Längsachse desselben bewegbarer Auswerfer 10 .

Der Stanzvorgang wird eingeleitet, wenn der zu bearbeitende Geflügelschenkel die entsprechende Stanzposition unterhalb des Hohlstempels erreicht hat und kann ausgeführt werden, entweder in der Ruhephase bei intermittierend angetriebenem Förderer, oder bei kontinuierlicher Förderung während einer synchronen Begleitbewegung zwischen Förderer 2 und Hohlstempel 4 . Im Augenblick des Niedergangs des Hohlstempels 4 wird das Vakuum zugeschaltet, so daß sich beim Eindringen der Stirnschneide 5 in den Geflügelschenkel 11 im Innenraum 8 des Hohlstempels 4 ein Unterdruck bildet, der gegenüber der Stirnöffnung des Hohlstempels 4 durch den in dessen Innenraum 8 eindringenen Teil 16 des Geflügelschenkels 11 abgedichtet wird und somit lediglich an den zunächst noch offenen Schlitzen 9 einen Saugstrom erzeugt. Mit zunehmender Eindringtiefe werden diese jedoch verschlossen, so daß sich nunmehr der Unterdruck in dem Hohlstempel 4 weiter erhöht mit dem Effekt, daß zum einen der bereits ausgestanzte Teil 16 in den Hohlstempel 4 hineingezogen wird und zum anderen eventuell durch den Stanzvorgang erzeugte Kleinpartikel durch den Spalt zwischen der Innenwandung des Hohlstempels 4 und dem ausgestanzten Teil hindurch abgesaugt werden. Das Hineinsaugen des ausgestanzten Teils 16 in den Hohlstempel 4 bewirkt schließlich gegen Ende des Stanzvorgangs, daß noch ungetrennt verbliebene Fasern, Häute und dergleichen über die Stirnseite 5 gezogen und dadurch zum Abreißen gebracht werden.

Nach Beendigung des Stanzvorganges wird der Hohlstempel 4 zurückgezogen und unmittelbar darauf der Unterdruck abgeschaltet und vor dem neuen Stanzvorgang der Auswerfer 10 betätigt, der das ausgestanzte Teil 16 aus dem Innenraum 8 des Hohlstempels 4 ausschiebt.

Der Auswerfer 10 kann in einer Anordnung entfallen, bei der der Vakuumanschluß am freien Ende des Hohlstempels 4 vorgesehen und der Innenraum 8 desselben so ausgestaltet ist, daß das ausgestanzte Teil 16 abgesaugt werden kann. Dieses kann in einem zwischengeschalteten Puffergefäß aufgefangen werden, welches dann von Zeit zu Zeit zu leeren ist.

Der beschriebene Prozeß stellt eine ideale Vorbereitung zum Entbeinen von Geflügelschenkeln, d. h. Gewinnen des die Schenkelknochen umgebenden Fleisches dar, was vorzugsweise durch Ziehen der verbliebenen Knochenstümpfe unter Erfassen der äußeren Gelenkköpfe und Rückhalten des Fleisches geschieht.

## Bezugszeichenliste

1   Stanzvorrichtung

2   Förderer

3   Haltevorrichtung

4   Hohlstempel

5   Stirnschneide

6   Gegenlage

7   Anschlußstutzen

8   Innenraum

9   Schlitz

10   Auswerfer

11   Geflügelscchenkel

12   Mittelgelenk

13   Gelenkopf

14   "          "

15   Kniescheibe

16   ausgestanztes Teil

**Patentansprüche**

1.   Einrichtung zum Bearbeiten von Geflügelschenkeln , welche aus unteren und oberen Beingliedern bestehen, die durch ein Mittelgelenk miteinander verbunden sind, und bei welcher eine Stanzvorrichtung mit einem ringförmigen Hohlstempel zum Ausstanzen des Mittelgelenks vorgesehen ist,
**dadurch gekennzeichnet,**
daß der Hohlstempel (4) einen Anschlußstutzen (7) aufweist, welcher mit dem Innenraum (8) des Hohlstempels (4) in Verbindung steht und mit einer Vakuumquelle verbindbar ist.

2.   Einrichtung nach Anspruch 1 , **dadurch gekennzeichnet,** daß der Hohlstempel (4) in dem in das Stanzgut eindringenden Endbereich mit seitlichen Durchbrüchen (9) versehen ist.

3.   Einrichtung nach Anspruch 1 oder 2 , **dadurch gekennzeichnet,** daß der Hohlstempel (4) einen in seinem Innenraum (8) in Bewegungsrichtung des Hohlstempels (4) betätigbaren Auswerfer (10) aufweist.

4. Einrichtung nach Anspruch 1 oder 2 , **dadurch gekennzeichnet,** daß der Anschlußstutzen (7) am freien Ende des Hohlstempels (4) vorgesehen ist und der Anschluß der Vakuumquelle über ein Puffergefäß erfolgt.

*Fig. 1*

*Fig. 2*

*Fig. 4*

*Fig. 3*

*Fig. 5*

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | EP-A-0 402 647 (BAADER) * Spalte 5, Zeile 46 - Spalte 6, Zeile 30; Abbildungen 1H,1I * | 1-3 | A22C17/00 |
| Y | EP-A-0 258 499 (LINCO HOLLAND ENGINEERING) * Spalte 3, Zeile 22 - Spalte 5, Zeile 44 * | 1 | |
| Y | EP-A-0 404 235 (STORK) * Anspruch 1 * | 2 | |
| Y | US-A-5 064 403 (ELSTEN) * Spalte 4, Zeile 48 - Zeile 52 * | 3 | |
| A | US-A-3 526 018 (LOVITT) * Spalte 3, Zeile 28 - Zeile 50 * | 1 | |
| A | US-A-4 446 600 (HOOLEY) * Spalte 2, Zeile 1 - Zeile 12 * * Spalte 2, Zeile 62 - Spalte 3, Zeile 18 * * Spalte 5, Zeile 43 - Zeile 46 * | 3 | |
| A | EP-A-0 280 080 (LINDERT) | | |
| A | DE-A-2 313 092 (GORDON JOHNSON-STEPHENS) | | |
| A | US-A-2 943 346 (JENSEN) | | |
| A | FR-A-2 642 614 (GIANBON) | | |

RECHERCHIERTE SACHGEBIETE (Int. Cl.5)

A22C

Der vorliegende Recherchenbericht wurde für alle Patentansprüche erstellt

| Recherchenort | Abschlußdatum der Recherche | Prüfer |
|---|---|---|
| DEN HAAG | 01 FEBRUAR 1993 | DE LAMEILLIEURE D. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
............................................................
& : Mitglied der gleichen Patentfamilie, übereinstimmendes Dokument